# EUROPEAN PATENT APPLICATION

(11) **EP 4 708 043 A1**
(43) Date of publication of application: **11.03.2026**
(21) Application number: 24870917.2
(22) Date of filing: 26.09.2024
(51) Int. Cl.: G06F 9/451

(54) **SERVICE CARD REFRESHING METHOD AND ELECTRONIC DEVICE**

(30) Priority: 28.09.2023 CN 202311284320
(71) Applicant: Huawei Technologies Co., Ltd., Shenzhen, Guangdong 518129 (CN)
(72) Inventor: WEI, Yunxing, Shenzhen, Guangdong 518129 (CN); ZHOU, Daoyang, Shenzhen, Guangdong 518129 (CN); ZHU, Chenlu, Shenzhen, Guangdong 518129 (CN); YAN, Song, Shenzhen, Guangdong 518129 (CN)
(74) Representative: Maiwald GmbH
(86) International application number: PCT/CN2024/121589
(87) International publication number: WO 2025/067378

(57) **Abstract**

A service widget refresh method and an electronic device are provided. In the method, first, a data proxy module in the electronic device 100 may monitor a data management service. Then, the data proxy module may notify a widget component of an address of refreshed data through a widget management service based on a refresh mechanism or by detecting an update or a change of data in the data management service. The widget component may obtain the refreshed data based on the address of the refreshed data, and render and display the refreshed data in the widget component. According to the technical solution provided in this application, when a service widget is refreshed, an application corresponding to the service widget, namely, a widget provider, may not be started. In this way, power consumption of the electronic device can be reduced.

## Description

This application claims priority to Chinese Patent Application No. 202311284320.X, filed with the China National Intellectual Property Administration on September 28, 2023 and entitled "SERVICE WIDGET REFRESH METHOD AND ELECTRONIC DEVICE", which is incorporated herein by reference in its entirety.

### TECHNICAL FIELD

This application relates to the field of terminals and communication technologies, and in particular, to a service widget refresh method and an electronic device.

### BACKGROUND

Currently, some electronic devices may display one or more service widgets. The service widget can be used to present some important information, common information, and the like provided by an application on a home screen in a widget form. In this way, a user can quickly browse application information or use a common function of the application through the service widget. The service widget can implement instant access to a service through lightweight interaction, reducing hierarchical redirections. For example, the user can quickly learn of weather information through a weather widget displayed on the home screen. For another example, the user may quickly browse a photo in a gallery through a gallery widget displayed on the home screen.

However, when the service widget is refreshed, how to reduce power consumption of the electronic device is a problem to be urgently resolved.

### SUMMARY

This application provides a service widget refresh method and an electronic device. According to the method, when a service widget in the electronic device is refreshed, power consumption of the electronic device can be reduced.

According to a first aspect, this application provides a service widget refresh method. The method may be applied to an electronic device, a first application is installed in the electronic device, and the electronic device may include a data proxy module, a widget management service, and a data management service. The method may include: The electronic device displays a first service widget, and displays first content in the first service widget; the data proxy module obtains an address of second content from the data management service, where the data management module is used to store a data identifier and an address of the first application, and the data identifier and the address of the first application include an identifier and an address of the first content and an identifier and an address of the second content; the data proxy module sends the address of the second content to the widget management service; the widget management service provides the address of the second content for the electronic device; and the electronic device obtains the second content based on the address of the second content, and displays the second content in the first service widget.

The first service widget may include a gallery widget, a calendar widget, and a weather widget.

The first application may include a gallery application, a calendar application, and a weather application.

When the first application is the gallery application, the first service widget may be the gallery widget. When the first application is the calendar application, the first service widget may be the calendar widget. When the first application is the weather application, the first service widget may be the weather application.

In this way, when content displayed in the first service widget is refreshed from the first content to the second content, the electronic device does not need to start the first application. This can reduce power consumption of the electronic device.

In a possible implementation, that the data proxy module obtains the address of the second content from the data management service may include: The widget management service sends a first notification to the data proxy module; and the data proxy module obtains the address of the second content from the data management service in response to the first notification. In this way, the data proxy module obtains the address of the second content from the data management service only when the widget management service sends, to the data proxy module, the first notification for obtaining the second content.

In a possible implementation, that the widget management service sends the first notification to the data proxy module may include: The widget management service presets a refresh mechanism of the first service widget, and sends the first notification to the data proxy module based on the refresh mechanism. In this way, the widget management service can determine, based on the refresh mechanism, an occasion for sending the first notification.

In a possible implementation, after the electronic device displays the first service widget, and displays the first content in the first service widget, the method may further include: When the data proxy module obtains updated third content from the data management service, the data proxy module sends an address of the third content to the widget management service; the widget management service provides the address of the third content for the electronic device; and the electronic device obtains the third content based on the address of the third content; and displays the third content in the first service widget. In this way, when the data proxy module detects that data is updated, for example, there is added data, the electronic device may obtain the updated third content from the data proxy module, and display the updated third content in the first service widget.

In a possible implementation, the electronic device further includes an application extension service. Before the electronic device displays the first service widget, and displays the first content in the first service widget, the method may further include: The first application obtains the first content and the second content, and stores the address of the first content and the address of the second content in the data management service; the first application provides the address of the first content for the application extension service; the application extension service center sends the address of the first content to the widget management service; and the widget management service provides the address of the first content for the electronic device. In this way, when the user enables the first service widget in the electronic device, content displayed in the first service widget may be provided by the application.

In a possible implementation, the method may further include: The first application detects an editing operation performed by a user on the first service widget, where the editing operation indicates the first service widget to obtain content of a first resource; the data proxy module sends an address of fourth content to the widget management service in response to the editing operation, where the fourth content is the content of the first resource; the widget management service sends the address of the fourth content to the electronic device; and the electronic device obtains the fourth content based on the address of the fourth content, and displays the fourth content in the first service widget.

In this way, when the first service widget is refreshed as triggered by a user operation, the data proxy module may directly obtain an address of content displayed by the first service widget next time, and there is no need to start an application. This can reduce power consumption of the electronic device.

In a possible implementation, that the data proxy module sends the address of the fourth content to the widget management service in response to the editing operation may include: performing first configuration in the data management service in response to the editing operation; the data management service sends the address of the fourth content to the data proxy module based on the first configuration; and the data proxy module sends the address of the fourth content to the widget management service.

In a possible implementation, performing the first configuration in the data management service in response to the editing operation may include: The first application sends a second notification to the widget management service in response to the editing operation; the widget management service sends a third notification to the application extension service in response to the second notification; and the application extension service performs the first configuration in the data management service in response to the third notification.

In a possible implementation, that the electronic device obtains the second content based on the address of the second content, and displays the second content in the first service widget may specifically include: The electronic device obtains the second content from the data management service based on the address of the second content; the data management service reads the second content from a hard disk of the electronic device into a memory of the electronic device; and obtains the second content from the memory of the electronic device, and displays the second content in the first service widget.

In a possible implementation, after the data management service reads the second content from the hard disk of the electronic device into the memory of the electronic device, the method may further include: The data management service sends a memory address of the second content in the memory of the electronic device to the electronic device.

In a possible implementation, the electronic device may further include a second application. That the electronic device displays the first service widget, and displays the first content in the first service widget may include: The second application displays the first service widget, and displays the first content in the first service widget.

According to a second aspect, an electronic device is provided. The electronic device may include one or more displays, one or more processors, and one or more memories. The one or more displays and the one or more memories are coupled to the one or more processors. The one or more memories are configured to store computer program code, where the computer program code includes computer instructions. When the one or more processors execute the computer instructions, the electronic device is enabled to perform the method according to any one of the possible implementations of the first aspect.

According to a third aspect, an electronic device is provided. The electronic device may include one or more functional modules, and the one or more functional modules are configured to implement the method according to any one of the possible implementations of the first aspect.

In a possible implementation, the electronic device includes a plurality of functional modules. The plurality of functional modules may include one or more of a data proxy module, a widget management service, a data management service, and an application extension service.

According to a fourth aspect, a chip system is provided. The chip system is used in an electronic device, and the chip system includes one or more processors. The processor is configured to invoke computer instructions, so that the electronic device performs the method according to any one of the possible implementations of the first aspect.

According to a fifth aspect, a computer-readable storage medium is provided, and includes instructions. When the instructions are run on an electronic device, the electronic device is enabled to perform the method according to any one of the possible implementations of the first aspect.

According to a sixth aspect, a computer program product is provided. When the program product runs on an electronic device, the electronic device is enabled to perform the method according to any one of the possible implementations of the first aspect.

### BRIEF DESCRIPTION OF DRAWINGS

FIG. 1A is a diagram of a user interface of an electronic device according to an embodiment of this application;
FIG. 1B is a diagram of a user interface of an electronic device according to an embodiment of this application;
FIG. 2 is a diagram of a software architecture of an electronic device according to an embodiment of this application;
FIG. 3A is a diagram of a software architecture of an electronic device according to an embodiment of this application;
FIG. 3B is a diagram of a software architecture of an electronic device according to an embodiment of this application;
FIG. 4A to FIG. 4C are diagrams of a group of user interfaces of an electronic device according to an embodiment of this application;
FIG. 5A and FIG. 5B are a diagram of interaction between software modules in a gallery widget refresh method according to an embodiment of this application; and
FIG. 6 is a diagram of a structure of an electronic device according to an embodiment of this application.

### DESCRIPTION OF EMBODIMENTS

Terms used in the following embodiments of this application are merely intended to describe specific embodiments, but are not intended to limit this application. The terms "a", "an", "the", "the foregoing", "the", and "this" of singular forms used in this specification and the appended claims of this application are also intended to include plural forms, unless otherwise specified in the context clearly. It should be further understood that the term "and/or" used in this application indicates and includes any or all possible combinations of one or more of listed items.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise stated, "a plurality of" means two or more.

The term "user interface (user interface, UI) in the specification, claims, and accompanying drawings of this application is a medium interface for interaction and information exchange between a user and an application or an operating system, and implements conversion between an internal form of information and a form acceptable to the user. A user interface of the application is source code written in a specific computer language like Java or an extensible markup language (extensible markup language, XML). The source code of the interface is parsed and rendered on a terminal device, and is finally presented as user-recognizable content, for example, a control like an image, text, or a button. The control (control) is also referred to as a widget (widget), and is a basic element in the user interface. Typical controls include a toolbar (toolbar), a menu bar (menu bar), an input box, a button (button), a scrollbar (scrollbar), an image, and text. Attributes and content of controls in the interface are defined by using tags or nodes. For example, the controls included in the interface are defined in the XML by using nodes such as <Textview>, <ImgView>, and <VideoView>. One node corresponds to one control or attribute in the interface. After being parsed and rendered, the node is displayed as user-visible content. In addition, interfaces of many applications such as a hybrid application (hybrid application) usually further include a web page. The web page, also referred to as a page, may be understood as a special control embedded in a user interface of an application. The web page is source code written in a specific computer language, for example, a hypertext markup language (hypertext markup language, HTML), cascading style sheets (cascading style sheets, CSS), or JavaScript (JavaScript, JS). The web page source code may be loaded and displayed as user-recognizable content by a browser or a web page display component with a function similar to a function of the browser. Specific content included in the web page is also defined by using tags or nodes in the web page source code. For example, elements and attributes of the web page are defined in the HTML by using <p>, <img>, <video>, and <canvas>.

The user interface is usually represented in a form of graphical user interface (graphic user interface, GUI), and is a user interface that is related to a computer operation and that is displayed in a graphical manner. The user interface may be an interface element like a window or a control displayed on a display of an electronic device.

In embodiments of this application, a service widget may be an interface presentation form of a feature ability (feature ability, FA). The service widget may present important information or an operation of the FA on the widget, to implement direct service access.

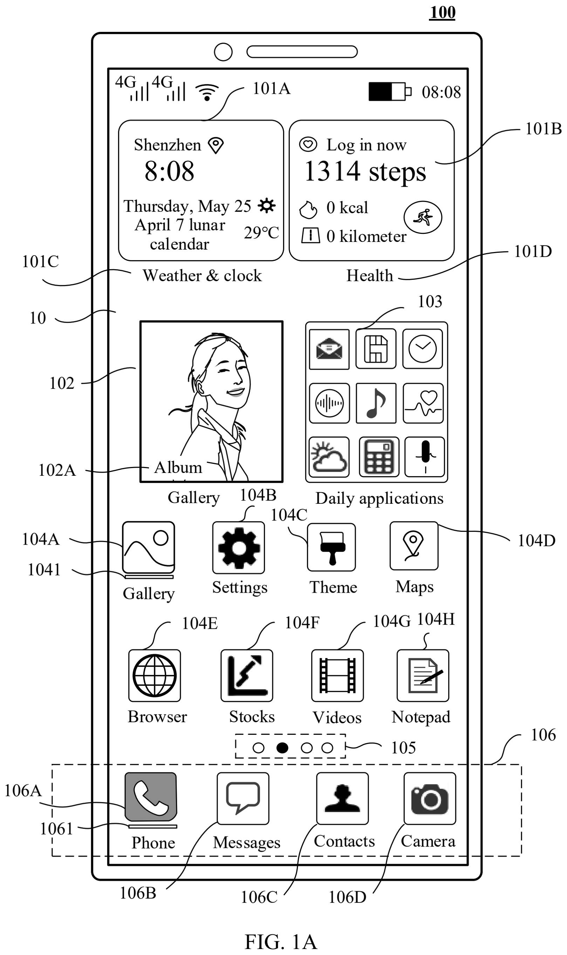

For example, as shown in FIG. 1A, an electronic device 100 may display a page 10 of a home screen. The page 10 displays a page on which an application icon and a service widget are placed. The page 10 may include a plurality of service widgets, such as a service widget for weather & clock (which may be referred to as a weather & clock widget for short) 101A, a service widget for health (which may be referred to as a health widget for short) 101B, and a service widget for a gallery (which may be referred to as a gallery widget for short) 102. The weather & clock widget 101A may display time information (for example, year, month, day, week, lunar calendar, and hour and minute) and weather information (for example, an icon for identifying weather and a temperature). The health widget 101B may display information such as a quantity of exercise steps. The gallery widget 102 may display a photo in the gallery.

Optionally, the gallery widget 102 may further include text information 102A. Content of the text information 102A may be "Album", and may indicate that the photo or picture displayed on the gallery widget 102 comes from an album in the gallery of the electronic device 100.

As shown in FIG. 1A, the page 10 may include a plurality of application icons (such as a gallery application icon 104A, a settings application icon 104B, a theme application icon 104C, a maps application icon 104D, a browser application icon 104E, a stocks application icon 104F, a videos application icon 104G, and a notepad application icon 104H).

Optionally, a page indicator 105 is further displayed on a lower part of the page on which the application icons are placed, to indicate a total quantity of pages on the home screen and a location relationship between a currently displayed page and another page. For example, the home screen may include four pages. A black dot in the page indicator is in the second, which may indicate that the currently displayed page (for example, the page 10) is the second page in the four pages. The second page may be referred to as a home page (or may be referred to as a first screen) of the home screen.

Optionally, in some examples, the black dot in the page indicator may alternatively be in the first. When the black dot in the page indicator is in the first, it may indicate that the currently displayed page is a leftmost page in the four pages. The leftmost page may also be referred to as a leftmost screen of the home screen.

Optionally, in some examples, the black dot in the page indicator may alternatively be in the fourth. When the black dot in the page indicator is in the fourth, it may indicate that the currently displayed page is a rightmost page in the four pages. The rightmost page may also be referred to as a tail screen of the home screen.

Optionally, a status bar is further displayed on an upper part of the page on which the application icons are placed. The status bar may include information such as a strength indicator of a communication signal, a battery level value, and time. Further, optionally, there may be a dock (dock) area 106 below the page indicator. The dock area 106 may include one or more dock icons (such as a phone application icon 106A, a messages application icon 106B, a contacts application icon 106C, and a camera application icon 106D). One or more dock icons in the dock area may remain displayed during page switching.

Optionally, if there is a prompt bar below an application icon, it indicates that the application is embedded with a service widget. For example, a prompt bar 1041 is displayed below the gallery application icon 104A. A prompt bar 1061 is displayed below the phone application icon 106A. For example, a user may slide up on the application icon with a finger to enable a service widget. For example, the user may slide up on the phone application icon 106A with a finger to enable a phone service widget.

In the service widgets displayed on the electronic device 100, some service widgets may be resident service widgets (such as the gallery widget, the weather & clock widget, and the health widget), and some service widgets may be non-resident service widgets (such as a flight information widget and a ride widget). After a resident service widget is enabled, the resident service widget may be always displayed on the home screen of the electronic device 100. Certainly, the user may choose to disable the resident service widget. The non-resident service widget is not always displayed on the home screen of the electronic device 100, and is displayed on the home screen of the electronic device 100 only in a specific scenario (for example, at specific time or at a specific location). For example, the flight information widget may be displayed on the home screen of the electronic device 100 within 24 hours before departure time of a flight taken by the user. For another example, a metro information widget may be displayed on the home screen of the electronic device 100 only when the electronic device 100 detects that a current location is close to a metro station (for example, a distance between the current location and the metro station is less than a preset threshold, where the preset threshold may be 5 meters or 10 meters, and is not limited in embodiments of this application).

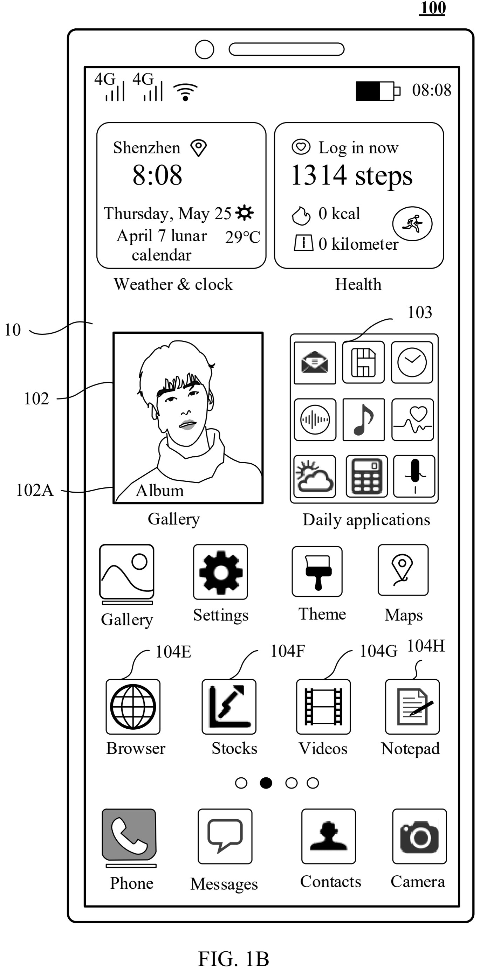

In embodiments of this application, content displayed in some service widgets is refreshed at scheduled time or periodically, and content displayed in some service widgets is refreshed only after data in a corresponding widget content provider is updated. Different service widgets may have different refresh mechanisms. For example, the gallery widget may display photos in an album in turn, and change a photo for display every 5s. For example, in comparison with FIG. 1A, a photo displayed in the gallery widget 102 on the page 10 shown in FIG. 1B is refreshed and displayed. In other words, the photo displayed in the gallery widget 102 is updated (a photo A is updated to a photo B for display).

In some embodiments of this application, content displayed in a service widget may be referred to as content of the service widget for short. The content of the service widget may include but is not limited to one or more of an icon, data, text, a button, and a picture.

The following describes a service widget refresh process in an electronic device with reference to the accompanying drawings.

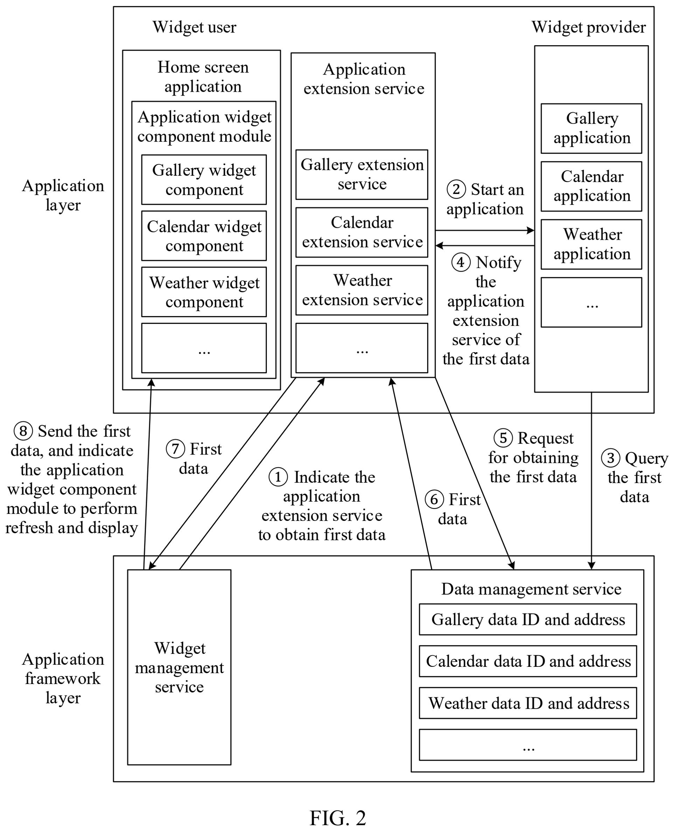

FIG. 2 is a diagram of a software architecture of an electronic device 100 according to an embodiment of this application.

As shown in FIG. 2, the electronic device 100 may include an application layer and an application framework layer.

The application layer may include a widget user, an application extension (form extension) service, and a widget provider.

The widget user may be used to display a service widget and control a location (for example, a home screen, a service center, or search) at which the service widget is displayed.

In some embodiments, the widget user may include an application widget component module. An application widget component may be configured to display content of the service widget.

In some embodiments, the application widget component may be understood as a container for placing the content of the service widget. The electronic device may place the content of the service widget in the application widget component. The application widget component may display, as a user-visible service widget, the content of the service widget placed by the electronic device.

An application extension service may be used to obtain the content of the service widget. The content of the service widget obtained by the application extension service may be displayed in the application widget component. The application extension service may be further used to create and edit a widget. When the user choose to enable a service widget or edits a service widget on the electronic device, the application extension service may configure UI data required by the service widget (that is, configure content displayed in the service widget).

Further, in a possible implementation, the application widget component module may include a plurality of application widget components, such as a gallery widget component, a calendar widget component, and a weather widget component. The gallery widget component may be configured to display a photo in a gallery application. The calendar widget component may be configured to display calendar information (for example, year, month, and day in the Gregorian calendar, year, month, and day in the lunar calendar, and week), a schedule, or the like. The weather widget component is configured to display weather information. The weather information may include a temperature, a weather type (sunny, cloudy, overcast, shower, thunderstorm, or the like), and the like.

Correspondingly, the application extension service may further include application extension sub-services corresponding to the plurality of application widget components. For example, the application extension service may include a plurality of application extension sub-services such as a gallery extension service, a calendar extension service, and a weather extension service. The gallery extension service may be used to obtain content of a gallery widget. The content of the gallery widget may be displayed in a gallery application component. The calendar extension service may be used to obtain data like calendar information or a schedule. The data like the calendar information or the schedule may be displayed in the calendar widget component. The weather extension service may be used to obtain real-time weather information, where the real-time weather information may be displayed in the weather widget component.

The widget user may include a home screen application.

The widget provider may be an application or an atomic service that provides display content of a service widget. The widget provider may control display content of the widget, a control layout, and a control tap event. For example, the widget provider may include applications, such as a gallery application, a calendar application, and a weather application, embedded with service widgets.

As shown in FIG. 2, a terminal may include a widget management service (form manager service, FMS) and a data management service. The widget management service (form manager service, FMS) and the data management service may be provided at the application framework layer.

The widget management service may be used to start an application extension sub-service (for example, the gallery extension service) in the application extension service, and may further provide, for the application widget component module (for example, the gallery widget component), data obtained by the application extension sub-service. The data management service may be used to store application data of each application in the electronic device 100.

The data management service may store application data IDs corresponding to service widgets in the electronic device and storage addresses corresponding to the application data IDs. For example, the data management service may store a data mapping table, and the data mapping table may include the application data IDs corresponding to the service widgets and the storage addresses corresponding to the application data IDs, such as a gallery application data ID and an address corresponding to the application data ID, a calendar application data ID and an address corresponding to the calendar application data ID, a weather application data ID and an address corresponding to the weather application data ID. For example, the data management service may store the data mapping table shown in Table 1.

**Table 1 Data mapping table**

| Application | Application data ID | Storage address |
|---|---|---|
| Gallery | Photo 1 | Address 11 |
| | Photo 2 | Address 12 |
| | ... | ... |
| Calendar | Calendar data 1 | Address 21 |
| | Calendar data 2 | Address 22 |
| | ... | ... |
| Weather | Weather data 1 | Address 31 |
| | Weather data 2 | Address 32 |
| | ... | ... |

As shown in Table 1, the data mapping table stored in the data management service may include data IDs in the gallery application and storage addresses corresponding to the data IDs, such as the photo 1 and a storage address of the photo 1, and the photo 2 and a storage address of the photo 2. The storage address of the photo 1 may be the address 11, and the storage address of the photo 2 may be the address 12.

As shown in Table 1, the data mapping table stored in the data management service may include data IDs in the calendar application and storage addresses of the data, such as the calendar data 1 and a storage address of the calendar data 1, and the calendar data 2 and a storage address of the calendar data 2. The storage address of the calendar data 1 may be the address 21, and the storage address of the calendar data 2 may be the address 22. The calendar data 1 and the calendar data 2 each may be any one of a date, a time, a reminder item, and the like. The calendar data 1 and the calendar data 2 are not specifically limited in embodiments of this application.

As shown in Table 1, the data mapping table stored in the data management service may include data in the weather application and storage addresses, such as the weather data 1 and a storage address of the weather data 1, and the weather data 2 and a storage address of the weather data 2. The storage address of the weather data 1 may be the address 31, and the storage address of the weather data 2 may be the address 32. The weather data 1 and the weather data 2 each may be weather forecast or weather warning half an hour later (for example, there is a red rainstorm warning one hour later). The weather data 1 and the weather data 2 are not specifically limited in embodiments of this application.

An address of application data stored in the data management service may be a storage address of the application data in a hard disk of the electronic device 100. The data management service may further read the application data from the hard disk into a memory.

In some embodiments of this application, when the electronic device adds the gallery widget to the home screen, the home screen application of the electronic device correspondingly generates the gallery widget component. Then, when the widget management service determines that the gallery widget is added to the home screen application, the widget management service may register the gallery extension service in the application extension service. In some embodiments of this application, when the electronic device deletes the gallery widget from the home screen, the home screen application of the electronic device may delete the gallery widget component from the home screen application. When a system of the electronic device detects that the gallery extension service does not exchange data with another module (for example, the widget management service or the data management service) in the electronic device within preset duration, the system of the electronic device may deregister the gallery application service. Alternatively, optionally, when the widget management service determines that the gallery widget is deleted from the home screen application, the widget management service may indicate the application extension service to deregister the gallery extension service.

Similarly, in some embodiments of this application, when the electronic device 100 adds a calendar widget to the home screen, the home screen application of the electronic device 100 correspondingly generates the calendar widget component. Then, when the widget management service determines that the calendar widget is added to the home screen application, the widget management service may register the calendar extension service in the application extension service. When the electronic device 100 deletes the calendar widget from the home screen, the home screen application of the electronic device 100 may delete the calendar widget component from the home screen application. When a system of the electronic device 100 detects that the calendar extension service does not exchange data with another module (for example, the widget management service or the data management service) in the electronic device within preset duration, the system of the electronic device 100 may deregister the calendar extension service. Alternatively, optionally, when the widget management service determines that the calendar widget is deleted from the home screen application, the widget management service may indicate the application extension service to deregister the calendar extension service.

Similarly, in some embodiments of this application, when the electronic device 100 adds a weather widget to the home screen, the home screen application of the electronic device 100 correspondingly generates the weather widget component. Then, when the widget management service determines that the weather widget is added to the home screen application, the widget management service may register the weather extension service in the application extension service. When the electronic device 100 deletes the weather widget from the home screen, the home screen application of the electronic device 100 may delete the weather widget component from the home screen application. When a system of the electronic device 100 detects that the weather extension service does not exchange data with another module (for example, the widget management service or the data management service) in the electronic device within preset duration, the system of the electronic device 100 may deregister the weather extension service. Alternatively, optionally, when the widget management service determines that the weather widget is deleted from the home screen application, the widget management service may indicate the application extension service to deregister the weather extension service.

In some embodiments, the application extension service may be understood as an application existing in a background of the electronic device 100. The application extension service is a non-resident application, and needs to be started by the widget management service.

The following describes a processing mechanism for refreshing a service widget of the electronic device 100 in detail with reference to the foregoing service widget architecture.

①: The widget management service in the electronic device 100 indicates the application extension service to obtain first data.

For the service widgets displayed in the electronic device 100, there may be a refresh mechanism of each service widget in the widget management service. For example, the gallery widget may be displayed in a home screen application of the electronic device 100, and there may be a refresh mechanism of the gallery widget in the widget management service (for example, the gallery widget displays, in turn based on time, all photos in a gallery, an album specified by a user, or an album for storing photos of highlights of a user).

The widget management service may indicate, based on the refresh mechanism of each service widget, the corresponding application extension sub-service in the application extension service to obtain the first data. The first data is data to be displayed by the service widget next time. For example, the first data may be the photo 1. When the gallery widget needs to be refreshed, the widget management service may indicate the gallery extension service in the application extension service to obtain the photo 1. For another example, the first data may be the calendar data 1. When the calendar widget needs to be refreshed, the widget management service may indicate the calendar extension service in the application extension service to obtain the calendar data 1. For still another example, the first data may be the weather data 1. When the weather widget needs to be refreshed, the widget management service may indicate the weather extension service in the application extension service to obtain the weather data 1.

Different service widgets stored in the widget management service may have different refresh mechanisms. For example, the refresh mechanism of the gallery widget may be displaying, based on a preset time interval, photos that are in the gallery and that include highlights of a user in turn. For another example, a refresh mechanism of the calendar widget may be updating a date and a day of a week that correspond to a current day at 00:00 every day. In addition, if a user has set a schedule on the current day, the calendar widget may refresh and display the schedule 30 minutes before start time of the schedule. For still another example, a refresh mechanism of the weather widget may be updating weather data every hour, or when a city in which the user is located changes, that is, when the user leaves a city A and goes to a city B, refreshing a weather forecast of the city A to a weather forecast of the city B when the user arrives at the city B.

The refresh mechanism of the gallery widget, the refresh mechanism of the calendar widget, and the refresh mechanism of the weather widget are merely examples. Specific refresh mechanisms of service widgets such as the gallery widget, the calendar widget, and the weather widget are not limited in embodiments of this application.

②: The application extension service in the electronic device 100 starts an application.

The application extension service in the electronic device 100 may start the widget provider. For example, when the gallery extension service in the application extension service receives a notification that is sent by the widget management service and that is for obtaining refreshed data, the gallery extension service may start the gallery application, and obtain the refreshed data from the gallery application. For another example, when the calendar extension service in the application extension service receives a notification that is sent by the widget management service and that is for obtaining refreshed data, the calendar extension service may start the calendar application, and obtain the refreshed data from the calendar application. For still another example, when the weather extension service in the application extension service receives a notification that is sent by the widget management service and that is for obtaining refreshed data, the weather extension service may start the weather application, and obtain the refreshed data from the weather application.

③: The widget provider of the electronic device 100 queries the first data.

After the widget provider of the electronic device 100 is started, the widget provider may query the first data. The widget provider may query an address of the first data in the data management service. The data management service may notify the widget provider of an identifier and the address of the first data.

④: The widget provider of the electronic device 100 notifies the application extension service of the address of the first data.

After finding the first data, the widget provider of the electronic device 100 may notify a corresponding application extension service of the identifier of the first data and a storage address of the first data. For example, when the widget provider is the gallery application, the first data found by the gallery application in the data management service may be the photo 1. The gallery application may send an identifier of the photo 1 (for example, a name or an ID of the photo) and a storage address of the photo 1 to the gallery extension service. For another example, when the widget provider is the calendar application, the first data found by the calendar application in the data management service may be the calendar data 1. The calendar application may send an identifier of the calendar data 1 (for example, a name or an ID of the calendar data 1) and a storage address of the calendar data 1 to the calendar extension service. For still another example, when the widget provider is the weather application, the refreshed data found by the weather application in the data management service may be the weather data 1. The weather application may send an identifier of the weather data 1 (for example, a name or an ID of the weather data 1) and the weather data 1 to the weather extension service. In some embodiments, before receiving the refreshed data obtained by the weather extension service, the weather application may receive the weather data 1 sent by a weather server. Then, the weather application may store the weather data 1 in the data management service.

In some embodiments, the photo 1 may be a photo whose aesthetic score is greater than a threshold 1 in the data management service. Alternatively, the photo 1 may be a photo added to the data management service. Alternatively, the photo 1 may be a photo determined based on a refresh mechanism. This is not limited in embodiments of this application.

In some embodiments, the calendar data 1 may be data information added to the data management service. Alternatively, the calendar information 1 may be data information whose start time is close to current time (for example, the start time of the calendar data 1 is half an hour later than the current time) in the data management service.

Further, in some embodiments, the calendar data 1 may include one or more pieces of information such as schedule start time, specific schedule information (for example, a meeting schedule, a birthday reminder, or a ticket snatching reminder), schedule end time, and schedule reminder time. Specific content of the calendar data 1 is not limited in embodiments of this application.

In some embodiments, the weather data 1 may be weather data information added to the data management service.

Further, in some embodiments, the weather data 1 may include one or more pieces of information such as future weather type prediction, future weather occurrence time prediction, and future weather occurrence probability prediction. Specific content of the weather data 1 is not limited in embodiments of this application.

⑤: The application extension service in the electronic device 100 sends, to the data management service, a request for obtaining the first data.

After receiving the identifier and the storage address that are of the first data and that are sent by the widget provider, the application extension service in the electronic device 100 may send, to the data management service, the request for obtaining the first data. The request may carry the identifier of the first data and/or the storage address of the first data. For example, after receiving the identifier of the photo 1 and the storage address of the photo 1 that are sent by the gallery application, the gallery extension service may send, to gallery data, a request 1 for obtaining the photo 1. The request 1 may carry the identifier of the photo 1 and/or the storage address of the photo 1. For another example, after receiving the identifier of the calendar data 1 and the storage address of the calendar data 1 that are sent by the calendar application, the calendar extension service may send, to the data management service, a request 2 for obtaining the calendar data 1. The request 2 may carry the identifier of the calendar data 1 and/or the storage address of the calendar data 1. For still another example, after receiving the identifier of the weather data 1 and the storage address of the weather data 1 that are sent by the weather application, the weather extension service may send, to the data management service, a request 3 for obtaining the weather data 1. The request 3 may carry the identifier of the weather data 1 and/or the storage address of the weather data 1.

⑥: The data management service in the electronic device 100 sends the first data to the application extension service.

After receiving the request from the application extension service, the data management service in the electronic device 100 may read the corresponding first data from the hard disk of the electronic device into the memory, and send a memory address of the first data to the application extension service. For example, after receiving the request 1 sent by the gallery extension service, the gallery data may send a memory address of the photo 1 to the gallery extension service. For another example, after receiving the request 2 sent by the calendar extension service, the data management service may send a memory address of the calendar data 1 to the calendar extension service. For still another example, after receiving the request 3 sent by the weather extension service, the data management service may send a memory address of the weather data 1 to the weather extension service.

⑦: The application extension service in the electronic device 100 sends the obtained first data to the widget management service.

The application extension service in the electronic device 100 may send the obtained memory address of the first data to the widget management service. For example, the gallery extension service may send the obtained memory address of the photo 1 to the widget management service. For another example, the calendar extension service may send the obtained memory address of the calendar data 1 to the widget management service. For still another example, the weather extension service may send the obtained memory address of the weather data 1 to the widget management service.

⑧: The widget management service in the electronic device 100 sends the first data to the application widget component module, and indicates the application widget component module to perform refresh and display.

After receiving the memory address of the first data, the widget management service in the electronic device 100 may send a memory address of the refreshed data to the application widget component module, and indicates the application widget component module to perform refresh and display. After obtaining the memory address of the first data, the application widget component may obtain the first data based on the memory address of the first data, and render and display the first data in a corresponding service widget. In other words, after the application widget component performs refresh and display, the first data may be displayed in the corresponding service widget.

For example, the widget management service may send the received memory address of the photo 1 to the gallery widget component, and indicate the gallery widget component to perform refresh and display. Then, the gallery widget component may obtain the photo 1 based on the memory address of the photo 1, and render and display the photo 1. Finally, the visualized gallery widget in the electronic device 100 may include the photo 1.

For another example, the widget management service may send the received memory address of the calendar data 1 to the calendar widget component, and indicate the calendar widget component to perform refresh and display. Then, the calendar widget component may obtain the calendar data 1 based on the memory address of the calendar data 1, and render and display the calendar data 1. Finally, the visualized calendar widget in the electronic device 100 may include the calendar data 1.

For still another example, the widget management service may send the received memory address of the weather data 1 to the weather widget component, and indicate the weather widget component to perform refresh and display. Then, the weather widget component may obtain the weather data 1 based on the memory address of the weather data 1, and render and display the weather data 1. Finally, the visualized weather widget in the electronic device 100 may include the weather data 1.

In this case, when a service widget in the electronic device 100 is refreshed, the electronic device 100 needs to start an application corresponding to the service widget. In this way, when a resident service widget in the electronic device 100 needs to be frequently refreshed, the electronic device 100 needs to frequently start an application, resulting in high power consumption of the electronic device 100.

To reduce power consumption of the electronic device 100 during refresh of a service widget, embodiments of this application provide a service widget refresh method. The method may include: When a data proxy module in the electronic device 100 detects that data in a data management service is updated, or when a refresh mechanism in a data proxy module indicates to refresh a service widget, the data proxy module in the electronic device 100 may indicate a widget management service to refresh the service widget. Then, the widget management service may start a corresponding application extension service. Further, the application extension service obtains refreshed data from a corresponding data management service based on an identifier of the refreshed data and a storage address of the refreshed data as notified by the data proxy module. Then, the application extension service may send the obtained refreshed data to a corresponding application widget component module through the widget management service. Finally, the application widget component module may refresh and display the refreshed data in the corresponding service widget.

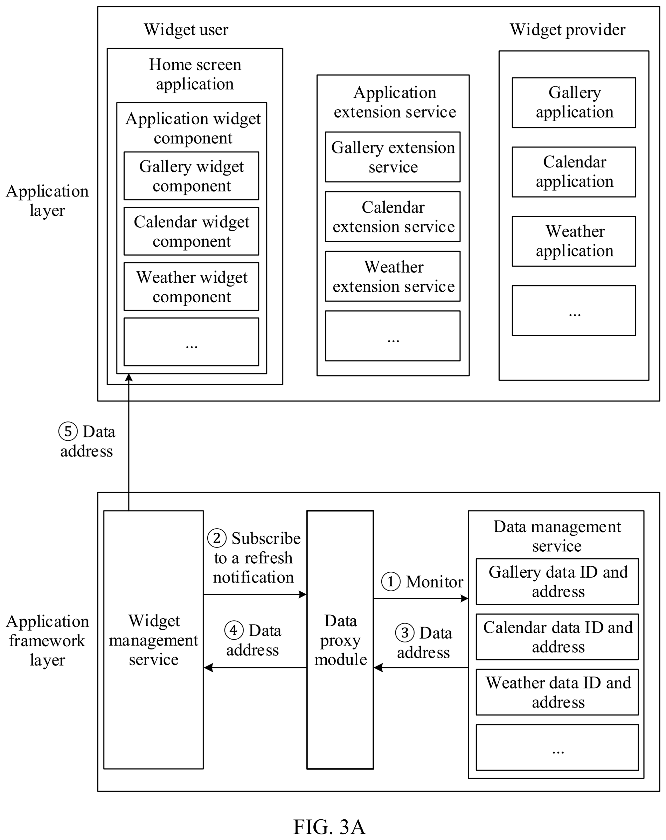

FIG. 3A shows an example of a software structure of an electronic device 100 according to an embodiment of this application.

As shown in FIG. 3A, the software architecture of the electronic device 100 may include an application layer and an application framework layer.

The application layer may include a widget user, an application extension service, and a widget provider. For details about the widget user and the widget provider at the application layer, refer to the descriptions in FIG. 2. Details are not described herein again.

In comparison with FIG. 2, when a refresh mechanism in a widget management service determines to change content displayed in a service widget, the widget management service no longer starts the application extension service to obtain refreshed data.

As shown in FIG. 3A, the application framework layer may include the widget management service, a data proxy module, and a data management service.

The data proxy module may be configured to monitor a change or update of data in the data management service, in other words, monitor addition or deletion of data in the data management service. The data proxy module may be further configured to subscribe to the widget management service. When the refresh mechanism in the widget management service determines to change the content of the service widget, the data proxy module may be indicated to query an address of the refreshed data in the data management service.

Refresh mechanisms of some service widgets may be formulated by a developer of the electronic device 100 and stored in the widget management service or the data proxy module. Alternatively, refresh mechanisms of some service widgets may be formulated by developers of widget providers of the service widgets, and the data proxy module may obtain the refresh mechanisms from the widget providers. Alternatively, refresh mechanisms of some service widgets may be formulated by a user. For example, the user may formulate refresh frequencies, refresh start time, and the like of data of the service widgets.

The widget management service may be configured to start the application extension service after receiving a refresh notification from the data proxy module. The widget management service may be further configured to: send, to an application widget component, the refreshed data obtained by the application extension service, and indicate the application widget component to perform refresh and display.

Refer to FIG. 3A. Based on the software architecture of the electronic device 100, the service widget refresh method provided in embodiments of this application may include the following steps.

: The data proxy module in the electronic device 100 monitors the data management service.

The data proxy module in the electronic device 100 may monitor the data management service. For example, the data proxy module may monitor the data management service periodically or at scheduled time. The data proxy module may learn, by monitoring the data management service, whether data is added to or deleted from the data management service.

②: The data proxy module in the electronic device 100 subscribes to the refresh notification from the widget management service.

Refresh mechanisms of some service widgets may be created in the widget management service. The data proxy module may subscribe to some refresh mechanisms from the widget management service. Specifically, the data proxy module may subscribe to the refresh mechanisms from the widget management service by using a subscribe() function. The subscribe() function may carry a subscribe (subscribe) ID, a uniform resource identifier (uniform resource identifier, URI), a callback (callback) function, a token ID, and options (options). The subscribe() function may be further used to subscribe to an event like creating a widget or editing a widget based on a user operation. The subscribe ID is a communication ID negotiated between the widget service management module and the data proxy module. The URI is a data request actively initiated by a user. The options may indicate timing or cyclic information of a refresh mechanism. The token ID may be used to identify a process.

When the widget management service determines to change content displayed by a service widget, the widget management service may send, to the data proxy module, a notification for obtaining data. For example, the data proxy module may obtain, from the widget management service by using the subscribe() function, the notification for obtaining the data.

The data proxy module may store refresh mechanisms of various service widgets or have subscribed to refresh mechanisms of various service widgets from the widget management service. For example, there are refresh mechanisms of various service widgets such as a gallery widget, a calendar widget, and a weather widget in the data proxy module. For the refresh mechanisms of the gallery widget, the calendar widget, and the weather widget, refer to the descriptions in step ① in FIG. 2. Details are not described herein again.

③: The data management service in the electronic device 100 sends a data address to the data proxy module.

The data management service may send, to the data proxy module, the data address to be refreshed and displayed by a service widget. Data corresponding to the data address may be data to be displayed by the service widget next time. For example, when the data proxy module detects that data in the data management service is a photo 1, the data proxy module may obtain an address of the photo 1 from the data management service. For another example, when the data proxy module detects that data in the data management service is calendar data 1, the data proxy module may obtain a storage address of the calendar data 1 from the data management service. For still another example, when data detected by the data proxy module may be weather data 1, the data proxy module may obtain an address of the weather data 1 from the data management service.

: The data proxy module in the electronic device 100 sends the data address to the widget management service.

The data proxy module may send the obtained data address to the widget management service. For example, the data proxy module may send the data address to the widget management service by using the callback function in the subscribe() function.

⑤: The widget management service in the electronic device 100 sends the data address to the application widget component.

The widget management service may send the data address to the application widget component. During rendering, the application widget component may obtain the data address through parsing, and obtain the data from the data management service based on the data address. After receiving, from the application widget component, a request for obtaining the data, the data management service may read the data into a memory from a hard disk corresponding to the data address.

In a possible implementation, the data management service reads the data into a public cache area in the memory. Then, the application widget component may directly obtain the data from the public cache area.

Optionally, in another possible implementation, after reading the data into the memory, the data management service further needs to send a memory address of the data to the application widget component. The application widget component obtains the data from the memory based on the memory address of the data.

After the application widget component obtains the data, the data may be rendered and displayed in the service widget.

The data obtained by the application widget component may be code in a JS, Java, or C++ language format, or binary data. The application widget component needs to parse and render the data into visualized content (for example, a picture, text, a button, or a control) displayed in the service widget.

In a possible implementation, the electronic device 100 further has a rendering engine. The application widget component sends the obtained data to the rendering engine. After parsing and rendering the data into an interface element, the rendering engine sends the interface element to the application widget component. The application widget component displays the interface element.

For example, the photo (referred to as the photo A below) in the gallery widget 102 in FIG. 1A is refreshed to the photo (referred to as the photo B below) in the gallery widget 102 in FIG. 1B for display. A refresh mechanism of the gallery widget 102 may be displaying photos in an album in turn, and changing a next photo every 5s. First, when the gallery widget 102 displays the photo A shown in FIG. 1A, based on the refresh mechanism in the widget management service, the widget management service may indicate the data proxy module to obtain a next photo of the photo A in the album, namely, the photo B. The data proxy module may obtain an address of the photo B from the data management service. Then, the data proxy module may send the address of the photo B to the widget management service. The widget management service may send the address of the photo B to a gallery widget component. The gallery widget component may parse the address of the photo B, and send, to the data management service based on the address of the photo B, a request for obtaining the photo B. After receiving the request, the data management service may read photo B from the hard disk into the memory. Then, the gallery widget component may obtain the photo B from the memory. Further, the gallery widget component may render and display the photo B in the gallery widget 102 (in other words, display the photo B in the gallery widget 102 in FIG. 1B).

In this embodiment of this application, an example in which the application extension service, the widget management service, and the data proxy module are software modules is used for description, that is, modules that implement corresponding functions in the electronic device.

Optionally, the widget management service and the data proxy module may alternatively be a same software module. The software module may implement functions of both the widget management service and the data proxy module in step ① to step ⑤.

Optionally, the widget management service and the application extension service may alternatively be a same software module. The software module may implement functions of both the widget management service and the application extension service in step ① to step ⑤.

In this embodiment of this application, the application widget component, for example, a gallery widget component, a calendar widget component, or a weather widget component, may be provided by a system of the electronic device, or may be provided by a third-party application. This is not limited in embodiments of this application.

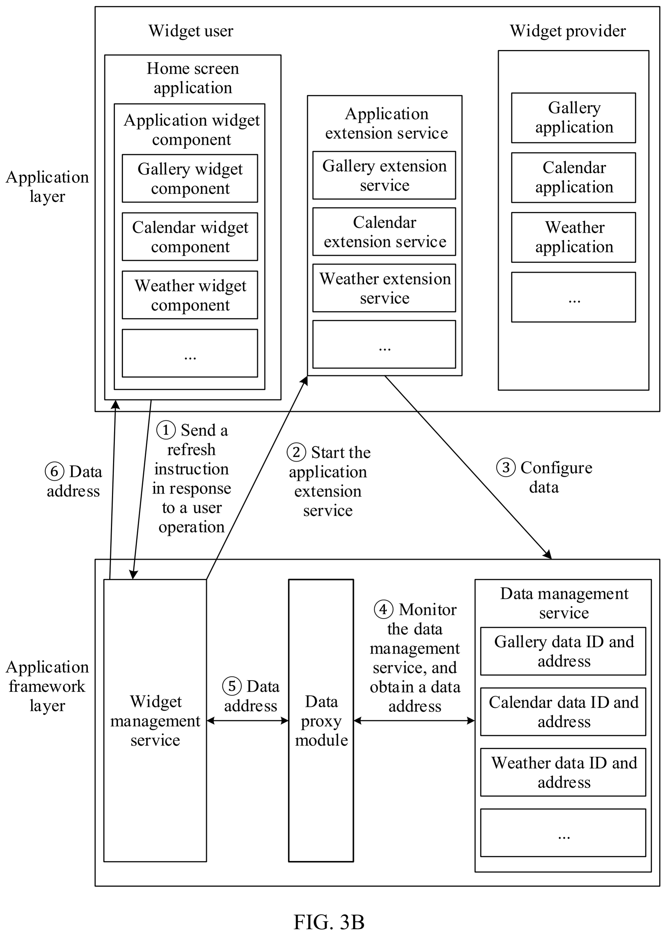

Refer to FIG. 3B. Based on the software architecture of the electronic device 100, when a home screen application updates a service widget in response to a user operation, the service widget refresh method provided in embodiments of this application may include the following steps.

①: An application widget component in the electronic device 100 sends a refresh instruction to a widget management service in response to a user operation.

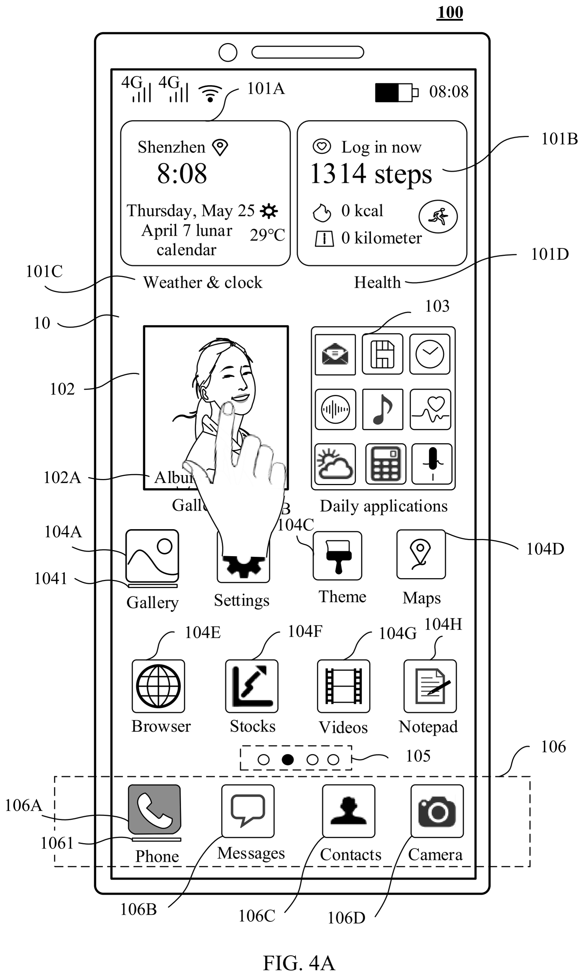

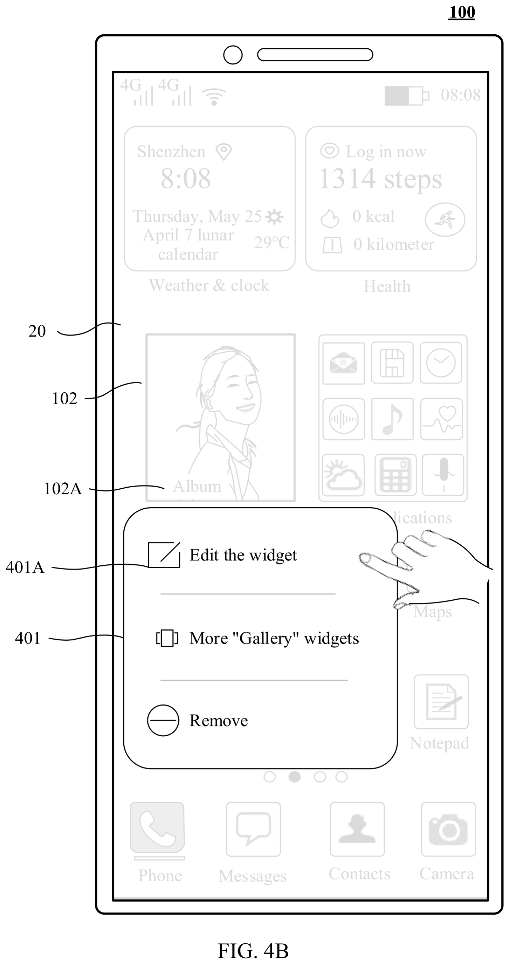

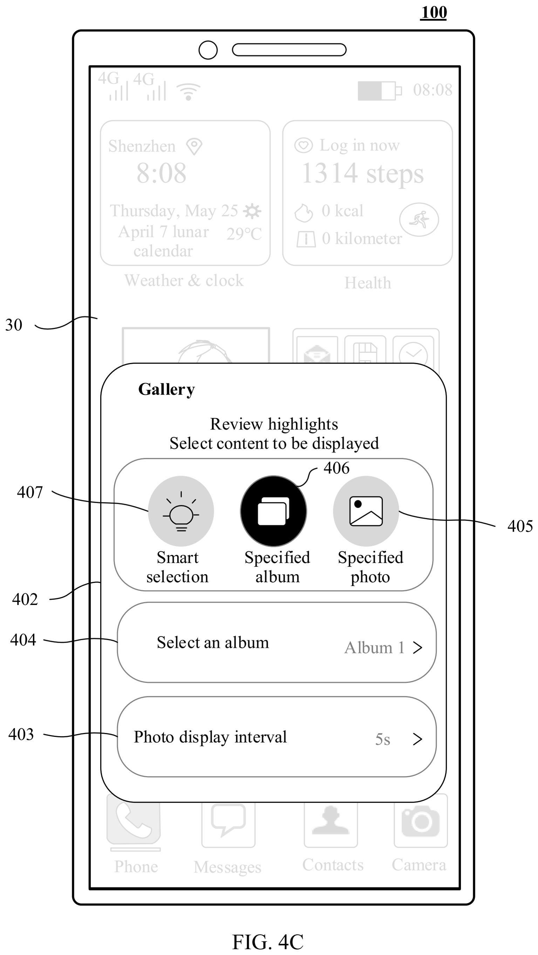

A user may create or edit the service widget. For example, as shown in FIG. 4A, the user may touch and hold a gallery widget 102. In response to the user operation, the electronic device 100 may display a user interface 20. As shown in FIG. 4B, the user interface 20 may display an option box 401, and the option box 401 may include an option 401A. The user may tap the option 401A. In response to the user operation, the electronic device 100 may display a user interface 30. As shown in FIG. 4C, the user interface 30 may display an option box 402. The option box 402 may include an option 403, an option 405, an option 406, and an option 407. The option 403 may be used to set a photo display interval (for example, 5s) in the gallery widget. The option 406 may be used to specify a gallery widget to display a photo in a specified album. After the user taps the option 406, the option box 402 may display an option 404. The user may specify an album by using the option 404. The option 405 may be used to specify a photo displayed by the gallery widget. The option 407 may be used to specify the gallery widget to display a smartly selected photo in a gallery.

The user may further tap a "More 'Gallery' widget" option in the option box 401 shown in FIG. 4B to create another gallery widget.

The user operations and user interfaces shown in FIG. 4A to FIG. 4C are merely examples. This is not limited in embodiments of this application.

In response to an operation of creating or editing the service widget by the user, the application widget component or the home screen application may send the refresh instruction to the widget management service.

Optionally, in a possible implementation, the refresh instruction may further carry a control on which a user operation is performed or coordinates of the control on which the user operation is performed.

②: The widget management service in the electronic device 100 starts an application extension service.

After receiving the refresh instruction, the widget management service in the electronic device 100 may send a refresh notification to the application extension service. The refresh notification may carry a control on which a user operation is performed or coordinates of the control on which the user operation is performed. The application extension service may determine, based on the refresh notification, whether to create the service widget or edit the service widget.

③: The application extension service in the electronic device 100 configures data in a data management service.

When the application extension service determines to create the service widget, the application extension service may configure, in the data management service during creating of the service widget, data required by the service widget. For example, when there is already a gallery widget in the electronic device 100, a gallery widget is created again based on a user operation, and the application extension service needs to configure data required by the created gallery widget. A photo displayed by the newly created gallery widget may be the same as or different from a photo displayed by the existing gallery widget. For example, the user may tap the "More 'Gallery' widgets" option shown in FIG. 4B. In response to the user operation, the application extension service needs to configure data required by another created gallery widget.

When the application extension service determines to edit the service widget, the application extension service may configure, in the data management service during editing of the service widget, data required by the service widget. For example, when the user specifies the gallery widget to display a photo in an album 1, the application extension service may configure data of the album 1 in the data management service. The application extension service may configure a data interface in the data management service. The data interface may be used to transmit photo data in the album 1.

That is, the application extension service specifies, in the data management service based on a user operation, data required for refreshing the service widget. The application extension service may configure a data interface in the data management service. The data interface may be used to transmit data required for refreshing the service widget.

④: The data proxy module in the electronic device 100 monitors data management service, and obtains a data address from the data management service.

The data proxy module in the electronic device 100 may monitor the data management service, and obtain the data address from the data management service. Then, the data management service may send, to the data proxy module through the data interface configured by the application extension service, the data address of the data required for refreshing the service widget.

⑤: The data proxy module in the electronic device 100 sends the data address to the widget management service.

The data proxy module may send the received data address to the widget management service.

⑥: The widget management service in the electronic device 100 sends the data address to the application widget component.

The widget management service may send the data address to the application widget component. During rendering, the application widget component may obtain the data address through parsing, and obtain the data from the data management service based on the data address. After receiving, from the application widget component, a request for obtaining the data, the data management service may read the data into a memory from a hard disk corresponding to the data address.

In a possible implementation, the data management service reads the data into a public cache area in the memory. Then, the application widget component may directly obtain the data from the public cache area.

Optionally, in another possible implementation, after reading the data into the memory, the data management service further needs to send a memory address of the data to the application widget component. The application widget component obtains the data from the memory based on the memory address of the data.

After the application widget component obtains the data, the data may be rendered and displayed in the service widget.

For step ⑥, refer to the descriptions of step ⑤ in FIG. 3A.

Optionally, in a possible implementation, the electronic device 100 may not perform step ④ and step ⑤. To be specific, after receiving the refresh notification sent by the widget management service, the application extension service in the electronic device 100 may directly obtain, from the data management service, the data address of the data required for refreshing the service widget. Then, the application extension service may send the obtained data address to the widget management service. Further, the electronic device 100 performs step ⑥.

In this way, refresh management of various service widgets can be implemented by using the data proxy module. There is no need to start a corresponding application when a service widget is refreshed. In this way, power consumption of the electronic device can be reduced.

To help understand the service widget refresh method in embodiments of this application, the following describes a gallery widget refresh process with reference to the accompanying drawings.

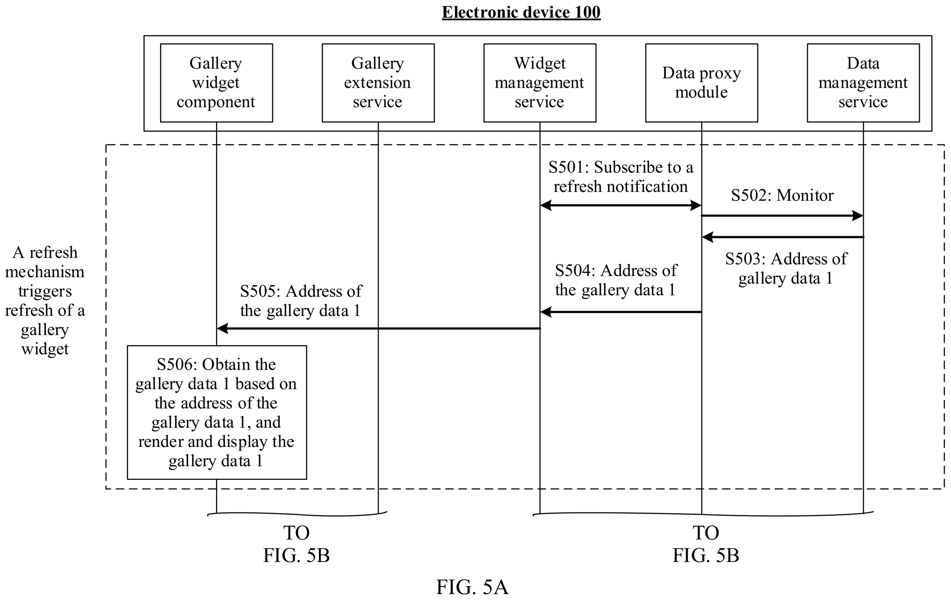

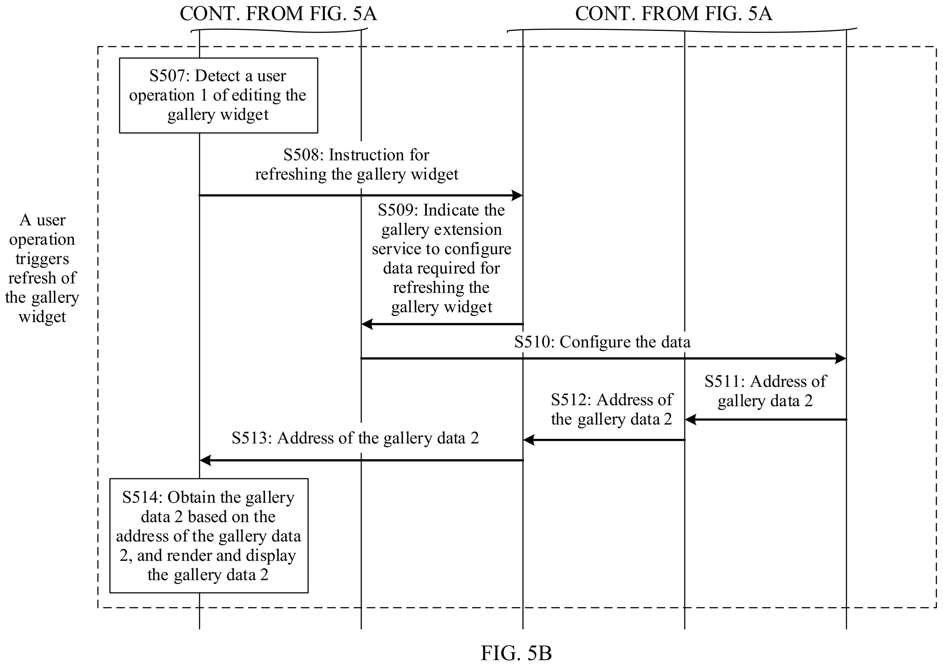

FIG. 5A and FIG. 5B are an interaction diagram of a gallery widget refresh process.

As shown in FIG. 5A and FIG. 5B, the gallery widget refresh process of an electronic device 100 may include the following steps.

S501 to S506: A refresh mechanism triggers refresh of a gallery widget.

S501: A data proxy module in the electronic device 100 subscribes to a refresh notification from a widget management service.

The data proxy module may subscribe to the refresh mechanism of the gallery widget from the widget management service. When the widget management service determines, based on the refresh mechanism, to change content displayed by the gallery widget, the data proxy module may obtain the refresh notification sent by the widget management service.

For step S501, refer to the descriptions of step ① in FIG. 3A. Details are not described herein again.

S502: The data proxy module in the electronic device 100 monitors a data management service.

The data proxy module may monitor the data management service periodically, at scheduled time, or in real time.

An execution sequence of step S501 and step S502 may be not limited.

S503: The data management service in the electronic device 100 sends an address of gallery data 1 to the data proxy module.

The data management service may send the address of the gallery data 1 to the data proxy module. For example, the refresh mechanism of the gallery widget is that the gallery widget displays photos in an album 1 in a gallery in turn, and changes a photo every 30 seconds. The gallery widget displays a photo 2 in the album 1 at 12:00:00. Based on the refresh mechanism, the gallery widget needs to refresh the photo at 12:00:30 for display, to display a photo 3 in the album 1. In this case, the data proxy module may start to obtain an address of the photo in the album 1 from the data management service n seconds before 12:00:30. Herein, a value of n may be 1, 2, or 3. A specific value of n is not limited in embodiments of this application.

Optionally, in a possible implementation, when the data proxy module detects that gallery data in the data management service changes, for example, a photo is added, the data proxy module may obtain an address of the added photo from the data management service, and then the data proxy module may send the address of the added photo to the widget management service.

Optionally, the refresh mechanism of the gallery widget may be that the gallery widget may replace a currently displayed photo with an added photo when the photo is added to the gallery. When no photo is added to the gallery, the gallery widget may not replace the currently displayed photo. Specifically, when a photo is added to the gallery, an identifier of the photo and a storage address corresponding to the identifier of the photo are correspondingly added to the data management service. Then, when the data proxy module detects that gallery data in the data management service changes, for example, a photo is added, the data proxy module may obtain an address of the added photo from the data management service, and then the data proxy module may send the address of the added photo to the widget management service.

S504: The data proxy module in the electronic device 100 sends the address of the gallery data 1 to the widget management service.

The data proxy module in the electronic device 100 may send the address of the gallery data 1 to the widget management service. The gallery data 1 may be a photo in the gallery, for example, the photo 1, the photo 2, the photo 3, and the like mentioned above.

S505: The widget management service in the electronic device 100 sends the address of the gallery data 1 to a gallery widget component.

The widget management service in the electronic device may send the address of the gallery data 1 to the gallery widget component.

For step S505, refer to the descriptions of step ⑤ in FIG. 3A. Details are not described herein again.

S506: The gallery widget component in the electronic device 100 obtains the gallery data 1 based on the address of the gallery data 1, and renders and displays the gallery data 1.

During rendering, the gallery widget component may parse the address of the gallery data 1. Then, the gallery widget component may obtain the data from the data management service based on the address of the gallery data 1. After receiving, from the gallery widget component, a request for obtaining the gallery data 1, the data management service may read the gallery data 1 into a memory from a hard disk corresponding to the address of the gallery data 1.

In a possible implementation, the data management service reads the gallery data 1 into a public cache area in the memory. Then, the gallery widget component may directly obtain the gallery data 1 from the public cache area.

Optionally, in another possible implementation, after reading the gallery data 1 into the memory, the data management service further needs to send a memory address of the gallery data 1 to the gallery widget component. The gallery widget component obtains the gallery data 1 from the memory based on the memory address of the gallery data 1.

After the gallery widget component obtains the gallery data 1, the gallery data 1 may be rendered and displayed in the service widget.

The data obtained by the gallery widget component may be code in a JS, Java, or C++ language format, or binary data. The gallery widget component needs to parse and render the data into visualized content (namely, a photo) displayed in the gallery widget.

In a possible implementation, the electronic device 100 further has a rendering engine. The gallery widget component sends the obtained gallery data 1 to the rendering engine. After parsing and rendering the gallery data 1 into a photo, the rendering engine sends the photo to an application widget component. The application widget component displays the photo.

S507 to S514: A user operation triggers refresh of the gallery widget.

S507: The gallery widget component in the electronic device 100 detects a user operation 1 of editing the gallery widget.

The user operation 1 may be an operation of editing the gallery widget by a user. For example, as shown in FIG. 4A to FIG. 4C, the user operation 1 may be that the user touches and holds the gallery widget 102, then taps the option 401A, then taps the option 406, and then selects an album in the option 404.

The user operation 1 is not limited in embodiments of this application.

S508: In response to the user operation 1, the gallery widget component in the electronic device 100 sends, to the widget management service, an instruction for refreshing the gallery widget.

In response to the user operation 1, the gallery widget component may send, to the widget management service, the instruction for refreshing the gallery widget.

S509: The widget management service in the electronic device 100 indicates a gallery extension service to configure data required for refreshing the gallery widget.

After the widget management service receives the instruction for refreshing the gallery widget, an application extension service may configure a data interface in the data management service, where the data interface may be used to transmit photo data in the album 1; and the widget management service may indicate the gallery extension service to configure the data required for refreshing the gallery widget.

S510: The gallery extension service in the electronic device 100 configures the data in the data management service.

After receiving the notification from the widget management service, the gallery extension service may configure the data in the data management service.

For step S510, refer to the descriptions of step ③ in FIG. 3B.

S511: The data management service in the electronic device 100 sends an address of gallery data 2 to the data proxy module.

The data configured by the gallery extension service may include the gallery data 2. Then, the data management service in the electronic device 100 may send the address of the gallery data 2 to the data proxy module.

S512: The data proxy module in the electronic device 100 sends the address of the gallery data 2 to the widget management service.

The data proxy module in the electronic device 100 may send the address of the gallery data 2 to the widget management service.

S513: The widget management service in the electronic device 100 sends the address of the gallery data 2 to a gallery widget component.

The widget management service in the electronic device 100 may send the address of the gallery data 2 to the gallery widget component.

S514: The gallery widget component in the electronic device 100 obtains the gallery data 2 based on the address of the gallery data 2, and renders and displays the gallery data 2.

During rendering, the gallery widget component may parse the address of the gallery data 2. Then, the gallery widget component may obtain the data from the data management service based on the address of the gallery data 2. After receiving, from the gallery widget component, a request for obtaining the gallery data 2, the data management service may read the gallery data 2 into a memory from a hard disk corresponding to the address of the gallery data 2.

In a possible implementation, the data management service reads the gallery data 2 into a public cache area in the memory. Then, the gallery widget component may directly obtain the gallery data 2 from the public cache area.

Optionally, in another possible implementation, after reading the gallery data 2 into the memory, the data management service further needs to send a memory address of the gallery data 2 to the gallery widget component. The gallery widget component obtains the gallery data 2 from the memory based on the memory address of the gallery data 1.

After the gallery widget component obtains the gallery data 2, the gallery data 2 may be rendered and displayed in the service widget.

The data obtained by the gallery widget component may be code in a JS, Java, or C++ language format, or binary data. The gallery widget component needs to parse and render the data into visualized content (namely, a photo) displayed in the gallery widget.

In a possible implementation, the electronic device 100 further has a rendering engine. The gallery widget component sends the obtained gallery data 2 to the rendering engine. After parsing and rendering the gallery data 2 into a photo, the rendering engine sends the photo to an application widget component. The application widget component displays the photo.

In this way, according to the foregoing steps, regardless of that the gallery widget is refreshed by the refresh mechanism or refreshed by the user operation, the electronic device does not need to start a gallery application each time the gallery widget is refreshed. In this way, power consumption of the electronic device can be reduced.

It may be understood that the service widget refresh method in this application may be applied to another service widget of the electronic device, for example, a calendar widget, a weather widget, or a health widget. For a refresh process of another service widget, refer to the gallery widget refresh process. Details are not described herein again.

It may be understood that there may be a plurality of widget providers of a service widget, that is, content displayed in the service widget may be data stored in a plurality of applications. For example, content displayed in the calendar widget may include a date, a day of a week, and a schedule. The date and the day of the week may be data stored in a hard disk by a calendar application, and the schedule may be data stored in a hard disk by a notepad application or a note application. A quantity of widget provider applications of the service widget that display content is not limited in embodiments of this application.

In embodiments of this application, first content may be content (for example, a photo A) displayed by the gallery widget before the gallery widget is refreshed, or content displayed by a calendar widget before the calendar widget is refreshed, or content displayed by a weather widget before the weather widget is refreshed. Second content and third content may be any one of the first data, the photo 1, the calendar data 1, the weather data 1, and the gallery data 1 that are mentioned above. Fourth content may be the gallery data 2 mentioned above.

The following describes an example electronic device 100 provided in embodiments of this application.

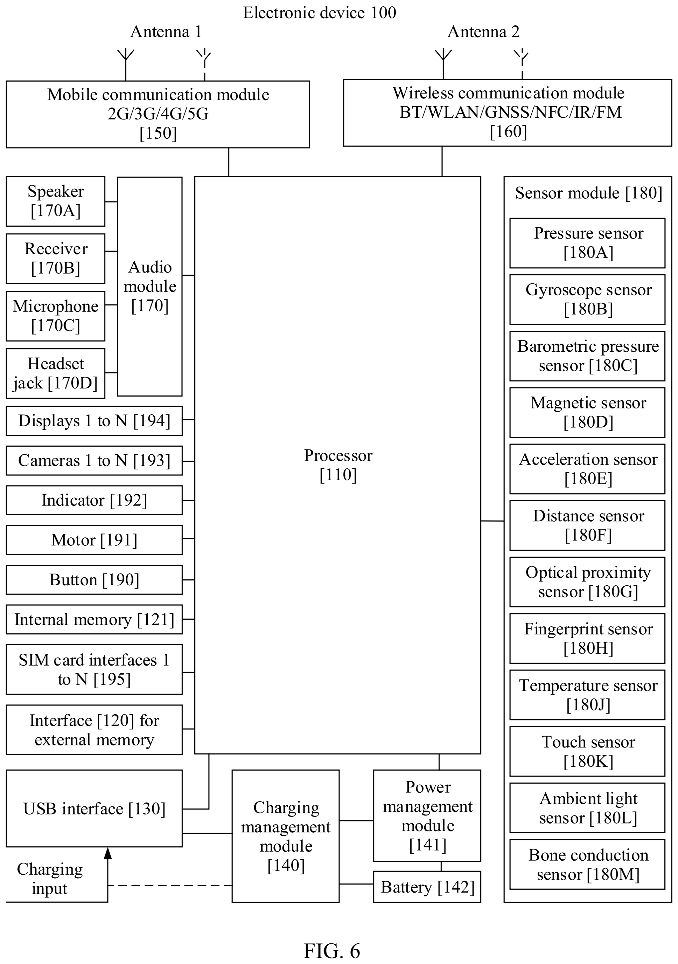

FIG. 6 is a diagram of a structure of an electronic device 100 according to an embodiment of this application.

The electronic device 100 is used as an example below to describe embodiments in detail. It should be understood that, the electronic device 100 may have more or fewer components than those shown in the figure, or a combination of two or more components, or an arrangement of different components. Various components shown in the figure may be implemented by using hardware including one or more signal processing and/or application-specific integrated circuits, software, or a combination of hardware and software.

The electronic device 100 may include: a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

The memory may be further disposed in the processor 110, and is configured to store instructions and data. In some embodiments, the memory in the processor 110 is a cache. The memory may store instructions or data that just used or cyclically used by the processor 110. If the processor 110 needs to use the instructions or the data again, the processor 110 may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset to play an audio through the headset. The interface may be further configured to connect to another electronic device, for example, an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution, applied to the electronic device 100, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same component as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and color of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code, where the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a facial recognition function, a fingerprint recognition function, and a mobile payment function), and the like. The data storage area may store data (such as facial information template data and a fingerprint information template) created during use of the electronic device 100, and the like. In addition, the internal memory 121 may include a high-speed random access memory, and may further include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines a pressure intensity based on the change in the capacitance. When a touch operation is performed on the display 194, the electronic device 100 detects an intensity of the touch operation through the pressure sensor 180A. The electronic device 100 may also calculate a touch location based on a detection signal of the pressure sensor 180A. In some embodiments, touch operations that are performed at a same touch location but have different touch operation intensities may correspond to different operation instructions. For example, when a touch operation whose touch operation intensity is less than a first pressure threshold is performed on a messages application icon, an instruction for viewing an SMS message is executed. When a touch operation whose touch operation intensity is greater than or equal to a first pressure threshold is performed on a messages application icon, an instruction for creating a new SMS message is executed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected open or closed state of the leather case or the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light-emitting diode (LED), and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is compatible with different types of SIM cards. The SIM card interface 195 is also compatible with an external memory card. The electronic device 100 interacts with a network through the SIM card, to implement functions such as conversation and data communication.

The electronic device 100 in embodiments of this application includes but is not limited to a terminal device that can display a service widget, for example, a mobile phone, a tablet computer, or a notebook computer.

In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

According to context, the term "when..." used in the foregoing embodiments may be interpreted as a meaning of "if...", "after...", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used for implementation, all or some of embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in embodiments may be implemented by a computer program instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

## Claims

1. A service widget refresh method, wherein the method is applied to an electronic device, a first application is installed in the electronic device, the electronic device comprises a data proxy module, a widget management service, and a data management service, and the method comprises:
displaying, by the electronic device, a first service widget, and displaying first content in the first service widget;
obtaining, by the data proxy module, an address of second content from the data management service, wherein the data management module is used to store a data identifier and an address of the first application, and the data identifier and the address of the first application comprise an identifier and an address of the first content and an identifier and an address of the second content;
sending, by the data proxy module, the address of the second content to the widget management service;
providing, by the widget management service, the address of the second content for the electronic device; and
obtaining, by the electronic device, the second content based on the address of the second content, and displaying the second content in the first service widget.

2. The method according to claim 1, wherein obtaining, by the data proxy module, the address of the second content from the data management service comprises:
sending, by the widget management service, a first notification to the data proxy module; and
obtaining, by the data proxy module, the address of the second content from the data management service in response to the first notification.

3. The method according to claim 2, wherein sending, by the widget management service, the first notification to the data proxy module comprises:
presetting, by the widget management service, a refresh mechanism of the first service widget, and sending the first notification to the data proxy module based on the refresh mechanism.

4. The method according to any one of claims 1 to 3, wherein after displaying, by the electronic device, the first service widget, and displaying the first content in the first service widget, the method further comprises:
when the data proxy module obtains updated third content from the data management service,
sending, by the data proxy module, an address of the third content to the widget management service;
providing, by the widget management service, the address of the third content for the electronic device; and
obtaining, by the electronic device, the third content based on the address of the third content, and displaying the third content in the first service widget.

5. The method according to any one of claims 1 to 4, wherein the electronic device further comprises an application extension service, and before displaying, by the electronic device, the first service widget, and displaying the first content in the first service widget, the method further comprises:
obtaining, by the first application, the first content and the second content, and storing the address of the first content and the address of the second content in the data management service;
providing, by the first application, the address of the first content for the application extension service;
sending, by the application extension service center, the address of the first content to the widget management service; and
providing, by the widget management service, the address of the first content for the electronic device.

6. The method according to claim 5, wherein the method further comprises:
detecting, by the first application, an editing operation performed by a user on the first service widget, wherein the editing operation indicates the first service widget to obtain content of a first resource;
sending, by the data proxy module, an address of the fourth content to the widget management service in response to the editing operation, wherein the fourth content is the content of the first resource;
sending, by the widget management service, the address of the fourth content to the electronic device; and
obtaining, by the electronic device, the fourth content based on the address of the fourth content, and displaying the fourth content in the first service widget.

7. The method according to claim 6, wherein sending, by the data proxy module, the address of the fourth content to the widget management service in response to the editing operation comprises:
performing first configuration in the data management service in response to the editing operation;
sending, by the data management service, the address of the fourth content to the data proxy module based on the first configuration; and
sending, by the data proxy module, the address of the fourth content to the widget management service.

8. The method according to claim 7, wherein performing the first configuration in the data management service in response to the editing operation comprises:
sending, by the first application, a second notification to the widget management service in response to the editing operation;
sending, by the widget management service, a third notification to the application extension service in response to the second notification; and
performing, by the application extension service, the first configuration in the data management service in response to the third notification.

9. The method according to any one of claims 1 to 8, wherein obtaining, by the electronic device, the second content based on the address of the second content, and displaying the second content in the first service widget specifically comprises:
obtaining, by the electronic device, the second content from the data management service based on the address of the second content;
reading, by the data management service, the second content from a hard disk of the electronic device into a memory of the electronic device; and
obtaining the second content from the memory of the electronic device, and displaying the second content in the first service widget.

10. The method according to claim 9, wherein after reading, by the data management service, the second content from the hard disk of the electronic device into the memory of the electronic device, the method further comprises:
sending, by the data management service, a memory address of the second content in the memory of the electronic device to the electronic device.

11. The method according to any one of claims 1 to 10, wherein the first service widget comprises a gallery widget, a calendar widget, and a weather widget.

12. The method according to claim 10, wherein the first application comprises a gallery application, a calendar application, and a weather application.

13. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 12 is performed.

14. A chip system, wherein the chip system is used in an electronic device, the chip system comprises one or more processors; and the processor is configured to invoke computer instructions, so that the method according to any one of claims 1 to 12 is performed.

15. A computer-readable storage medium, comprising instructions, wherein when the instructions are run on an electronic device, the method according to any one of claims 1 to 12 is performed.
